(19) Europäisches Patentamt
European Patent Office
Office européen des brevets

(11) EP 0 606 931 B1

(12) EUROPEAN PATENT SPECIFICATION

(45) Date of publication and mention of the grant of the patent:
**21.07.1999 Bulletin 1999/29**

(51) Int Cl.[6]: **C08L 71/12**
// (C08L71/12, 53:02, 25:06, 9:00)

(21) Application number: **94200008.4**

(22) Date of filing: **05.01.1994**

(54) **Polyphenylene ether based moulding composition**

Formmasse auf Basis von Polyphenylenäthern

Composition à mouler à base de poly(oxyphénylène)

(84) Designated Contracting States:
**AT BE CH DE DK ES FR GB IT LI LU NL SE**

(30) Priority: **15.01.1993 IT MI930041**

(43) Date of publication of application:
**20.07.1994 Bulletin 1994/29**

(73) Proprietor: **ENICHEM S.p.A.**
**20124 Milano (IT)**

(72) Inventors:
- **Ghidoni, Dario**
**I-46023 Gonzaga (Mantova) (IT)**
- **Fasulo, Gian Claudio**
**I-46010 San Silvestro (Mantova) (IT)**

(74) Representative: **Fusina, Gerolamo et al**
**Ing. Barzanò & Zanardo Milano S.p.A,**
**Via Borgonuovo, 10**
**20121 Milano (IT)**

(56) References cited:
**EP-A- 0 048 397**
**EP-A- 0 095 098**
**EP-A- 0 467 113**
**EP-A- 0 475 157**
**US-A- 3 265 765**
**US-A- 4 373 055**

Remarks:
The file contains technical information submitted after the application was filed and not included in this specification

EP 0 606 931 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

The present invention relates to a polyphenylene ether-based moulding composition.

More particularly, the present invention relates to a polyphenylene ether-based moulding composition displaying a good balance of physical-mechanical properties, such as (IZOD) resilience, as well as tensile and thermal characteristics, e.g., VICAT softening point.

Polyphenylene ether resins (PPE), also known as "polyphenylene oxide resins" are a well-known class of engineering polymers and are disclosed in a number of patents, such as, e.g., in U.S. patent Nos. 3,306,874, 3,306,875, 3, 257,357 and 3,257,358. They are useful for many applications, in which a high heat resistance is required and, by being thermoplastic, they can be fabricated into formed articles by means of injection or extrusion moulding techniques.

Notwithstanding this very large number of potential commercial applications of polyphenylene ether resins, their use is limited owing to their poor processability, mainly due to their relatively high viscosity in the molten state; and to their narrow processability range, which may cause difficulties during the extrusion and injection moulding operations.

Furthermore, the high temperatures required in order to soften the polymer and the problems associated with such high temperatures, such as instability and discolouration, render the techniques of extrusion and injection moulding not very much actractive from an industrial viewpoint.

A further drawback is that the polyphenylene ether resins display a poor solvent resistance after being formed and a low (IZOD) resilience, so their use for certain applications is still more limited.

In order to overcome these drawbacks, blending polyphenylene ether resins with other polymers displaying the properties such resins lack, was proposed.

So, e.g., U.S. patent No. 3,379,792 proposes to improve the fluidity of polyphenylene ether resins by means of the addition of a polyamide. However, according to the teaching of this patent, the blends are limited to a polyamide concentration of not more than 25% by weight; in fact, a further amount of polyamide causes delamination and an appreciable decay of the other physical-mechanical properties, such as resilience.

According to U.S. patent No. 3,361,851, the impact strength and the resistance to chemical agents of polyphenylene ether can be improved by adding a polyolefin.

U.S. patent No. 3,383,435 teaches that polyphenylene ether is compatible, in all proportions, with polystyrene resins, also including those modified with rubber in order to give them impact strength properties, and that the resulting compositions display improvements in many properties, as compared to those of each component and an improved processability. Preferred embodiments of U.S. patent No. 3,383,435 are those compositions which comprise a high-impact polystyrene (HIPS) and a poly(2,6-dialkyl-1,4-phenylene) ether. These compositions are important from the commercial viewpoint, because they make it possible improvements to be obtained both in processability of polyphenylene ether in the molten state, and in the impact strength of the formed articles which can be obtained from such compositions. Furthermore, by adjusting the ratio of both polymers to each other, compositions can be obtained which display predetermined properties, falling between those of polystyrene resins and those of polyphenylene ether.

A drawback displayed by these compositions is that the use of grafted rubber-modified high impact polystyrene, such as, e.g., LUSTREX HT-88, used in Example 7 of U.S. patent No. 3,383,435, implies an improvement in toughness, but to the damage of clearness.

In order to remove this drawback, U.S. patent Nos. 4,373,064 and 4,513,120 propose to mix polyphenylene ether with a particular type of high-impact polystyrene. Such a polystyrene comprises a polystyrenic matrix in which a discontinuous phase comprising particles of a styrene homopolymer embedded in a membrane of a dienic rubber, is uniformly dispersed; herein such particles have an average size comprised within the range of from 0.1 to 0.7 micrometres and the thickness of the membrane is not higher than half-diameter of the relevant particle. The rubber content is comprised within the range of from 1 to 10% by weight, based on rubber-modified polystyrene. The resulting compositions contain at least two phases, one of which is discontinuous and comprises the polystyrene particles embedded inside the rubber, and the other phase is continuous and comprises the polyphenylene ether and the polystyrene.

Unfortunately, also these compositions are not free from drawbacks. In fact, the improvement in toughness and clearness are obtained to the damage of heat resistance or VICAT softening point, what limits the use of these compositions in particular application sectors in which such a feature is required.

The present Applicant has surprisingly found now a moulding composition having an extremely good combination of physical-mechanical, tensile and thermal properties, characterised in that it consists of:

(C1) a polyphenylene ether, and
(C2) a high impact vinyl aromatic polymer consisting of a blend of

(i) a vinyl aromatic monomer-conjugated diene block polymer, containing at least two blocks with different molecular weights prevailingly consisting of a vinyl aromatic monomer, and at least one block prevailingly

consisting of a conjugated diene, said polymer having a content of vinyl aromatic monomer comprised within the range of from 55 to 85% by weight, and

(ii) a high-impact vinyl-aromatic polymer, containing from 5 to 15% by weight, based on said polymer, of a dispersed dienic rubber in the form of particles having a cellular structure and an average chord of at least 1.2 micrometers.

The proportions of both components ($C_1$) and ($C_2$) in the moulding composition according to the present invention may vary within a wide range, even if said component ($C_1$) is generally present in amounts of at least 1% by weight, and said component ($C_2$) is present in amounts of at least 20% by weight, based on total composition.

Compositions which have proved to be particularly advantageous for the purposes of the present invention are those containing:

* from 5 to 60% by weight of polyphenylene ether ($C_1$) and, correspondingly
* from 95 to 40% by weight of the high-impact vinyl aromatic polymer ($C_2$).

Preferably, the best results as regards IZOD resilience and VICAT softening point have been obtained when the compositions according to the present invention contained:

* from 20 to 45% by weight of polyphenylene ether ($C_1$) and, correspondingly
* from 80 to 55% by weight of high-impact vinyl aromatic polymer ($C_2$);

with said percent levels being referred to the total weight of the blend.

In the high-impact vinyl aromatic polymer ($C_2$), the weight ratio of components (i) and (ii) to each other is not critical for the purposes of the present invention. In general, the high-impact vinyl aromatic polymer ($C_2$) contains from 30 to 90% by weight of polymodal block polymer (i) and, correspondingly, from 70 to 10% by weight of vinyl aromatic polymer (ii) containing the dienic rubber in the form of dispersed particles.

A particularly preferred high-impact vinyl aromatic polymer ($C_2$) in the compositions according to the present invention is the one which contains from 50 to 85% by weight of the polymodal block polymer (i) and, correspondingly, from 50 to 15% by weight of the high-impact vinyl aromatic polymer (ii).

The expression "polymodal block copolymer" (i), as used in the present disclosure and in the appended claims, comprises the polymeric products which contain at least two blocks with different molecular weights prevailingly constituted by a vinyl aromatic monomer, and at least one block prevailingly constituted by a conjugated diene.

These polymodal block polymers can either be of linear type, or of radial type.

The polymodal linear block polymers can be represented by one of the following general formulae (I) or (II):

$$\text{(I)} \qquad S_1\text{-}B\text{-}S_2;$$

$$\text{(II)} \qquad B_1\text{-}S_1\text{-}B_2\text{-}S_2;$$

in which: $S_1$ and $S_2$ are non-elastomeric polymeric blocks of a vinyl aromatic monomer having different molecular weights; and B, $B_1$ and $B_2$ are elastomeric polymeric blocks based on a conjugated diene, having the same, or different molecular weights. These polymodal linear block polymers are already known from relevant technical literature and are disclosed, e.g., in U.S. patent No. 3,265,765.

In these polymodal linear block polymers, the non-elastomeric polymeric blocks have a molecular weight comprised within the range of from 5,000 to 250,000, and the elastomeric blocks have a molecular weight comprised within the range of from 2,000 to 250,000. Between the polymeric blocks $S_1$, $S_2$ and B, $B_1$ and $B_2$, "random" and/or "tapered" portions can be present.

In the "tapered" portion, the transition between B, $B_1$ and $B_2$ blocks, and $S_1$ and $S_2$ blocks can be gradual, in the sense that the proportion of the vinyl aromatic monomer in the dienic polymer progressively increases in the direction of the non-elastomeric polymeric block, while, accordingly, the proportion of conjugated diene progressively decreases. In the "random" portion, the vinyl aromatic and conjugated diene monomers follow each other haphazardly. The molecular weights of the "random" and/or "tapered" portions are preferably comprised within the range of from 500 to 50,000.

These polymodal linear block polymers can be prepared according to well-known techniques for those skilled in the art, such as, e.g., firstly forming a block of vinyl aromatic polymer, by anionic polymerization, in an inert solvent and in the presence of a lithium-based metal-organic catalyst (initiator), then forming the conjugated diene polymer

block by adding such a conjugated diene monomer to the polymerization mixture and subsequently forming another block of vinyl aromatic polymer by means of the addition of vinyl aromatic monomer.

The preparation of the polymodal linear block polymers is carried out in an inert hydrocarbon solvent, such as penthane, hexane, benzene, cyclohexane, and so forth, at a temperature comprised within the range of from 40°C to 120°C in the presence of catalytic amounts of an alkyl-, cycloalkyl- or aryl-lithium compound, such as, e.g., methyl-lithium, n-butyl-lithium, sec.-butyl-lithium, cyclohexyl-lithium and phenyl-lithium.

The polymodal linear block polymers are available from the market, such as, e.g., those products manufactured and marketed under "FINACLEAR(R) 520" trade mark, by the company Fina.

The radial polymodal block polymer is also of known type available from the market. Such a polymodal radial block copolymer can be of the following types:

$$\text{(III)} \qquad (S_1\text{-}S_2\text{-}B_1)_n\text{-}X\text{-}(B_1\text{-}S_2)_m;$$

$$\text{(IV)} \qquad (S_1\text{-}S_2/B_1\text{-}B_2)_m\text{-}X\text{-}(B_2\text{-}B_1/S_2)_n;$$

$$\text{(V)} \qquad (S_1\text{-}S_2\text{-}B_1/S_3\text{-}B_2)_m\text{-}X\text{-}(B_2\text{-}S_3/B_1\text{-}S_2)_n;$$

$$\text{(VI)} \qquad (S_1\text{-}B_1 \rightarrow S_2)_n\text{-}X\text{-}(S_2 \leftarrow B_1)_m;$$

$$\text{(VII)} \qquad (S_3\text{-}S_4\text{-}B_2 \rightarrow S_5)_n\text{-}X\text{-}(S_5 \leftarrow B_2\text{-}S_4)_m$$

$$\text{(VIII)} \qquad \begin{array}{r} (S_6\text{-}S_7\text{-}B_3\text{-}S_8\text{-}B_4)_p \\ \backslash \\ (S_7\text{-}B_3\text{-}S_8\text{-}B_4)_q\text{-}X \\ / \\ (S_8\text{-}B_4)_r \end{array}$$

wherein:

| | |
|---|---|
| $S_1$, $S_2$, $S_3$, $S_4$, $S_5$, $S_6$, $S_7$ and $S_8$ | are non-elastomeric polymeric blocks, of a vinyl-aromatic monomer, each having different molecular weights, thus yielding bimodal, trimodal, or, in general, polymodal blocks; |
| $B_1$, $B_2$, $B_3$ and $B_4$ | are elastomeric polymeric blocks based on a conjugated diene, having the same molecular weight or different molecular weights from one another; |
| X | is the radical of a polyfunctional coupling agent, by means of which the block copolymers forming the arms are chemically coupled with one another; |
| m and n | are integers, with m being larger than n, and the sum of which is equal to or larger than 3, generally comprised within the range of from 3 to 10 and preferably is either 3 or 4, and corresponds to the functionality of radical X; and |
| p, q and r | are integers the sum of which is larger than 3, generally comprised within the range of from 3 to 10 and preferably is either 3 or 4, and corresponds to the functionality of radical X; and |
| $S_2/B_1$, $B_1/S_2$, $B_1/S_3$ and $S_3/B_1$ | are blocks of copolymers, of either "random" and/or "tapered" type, of vinyl aromatic monomer and conjugated diene. |

The symbol "$\rightarrow$" of formulae (VI) and (VII) means that the transition between the polymeric blocks takes place gradually ("tapered"), rather than sharply, in the sense that the proportion of the vinyl aromatic monomer in the dienic polymer progressively increases in the direction of the non-elastomeric polymeric block, while the proportion of conjugated diene progressively decreases accordingly.

The coupling agent "X" is well-known from technical literature and is disclosed, e.g., in British patent No. 985,614. Typical examples for coupling agents are polyepoxides, such as, e.g., epoxidated polybutadiene; epoxidated linseed oil; polyesters, such as diethyl adipate; polyhalides, such as silicon tetrachloride; polyisocyanates, such as benzene 1,2,4-triisocyanate; polyimines; polyaldehydes; polyketones, such as 1,3,6-hexanetrione; polyanhydrides, such as pyromellitic dianhydride; polycarboxy acid halides, such as mellitoyl chloride; polyvinyl aromatic compounds, as disclosed in U.S. patent No. 3,280,824.

The preparation of these polymodal radial block polymers is carried out by means of well known techniques, by firstly forming the linear block copolymer containing active lithium atoms at a chain end, as disclosed above for polymodal linear block polymers, and subsequently adding the coupling agent having at least three functional groups capable of reacting with Lithium-carbon bonds, so as to link the carbon atoms chain to the functional group.

In these polymodal radial block polymers, the non-elastomeric polymeric blocks have a molecular weight comprised within the range of from 5,000 to 250,000, the elastomeric blocks have a molecular weight comprised within the range of from 5,000 to 50,000, the blocks of copolymers of "random" and/or "tapered" types have a molecular weight comprised within the range of from 500 to 50,000, and the $B_1 \rightarrow S_2$ and $B_2 \rightarrow S_5$ blocks preferably have a molecular weight comprised within the range of from 10,000 to 100,000.

These polymodal radial block polymers are well-known in technical literature; so, e.g., the polymers of formula (III) are disclosed in U.S. patent No. 4,403,074; the polymers of formula (IV) are disclosed in U.S. patent No. 4,221,884; the polymers of formula (V) are disclosed in published European patent application with publ. No. 0,255,001; U.S. patent Nos. 4,086,298 and 4,167,545 disclose the polymers of formula (VI) and (VII) and EPO patent No. 0,153,727, the polymers of formula (VIII).

The polymodal radial block polymers are available from the market from several manufacturers such as, e. g., from BASF under STYROLUX(R) trade mark, or from Phillips Petroleum under K-RESIN(R) trade mark.

The useful conjugated dienes for preparing the polymodal either linear or radial block polymers (i) are those containing from 4 to 8 carbon atoms in their molecule, such as, e.g., 1,3-butadiene, isoprene, 2,3-dimethyl-1,3-butadiene, pyperilene and mixtures thereof.

1,3-butadiene is particularly preferred.

The high-impact vinyl aromatic polymer (ii) can be prepared by means of any conventional techniques to produce crosslinked high-impact polymers, such as, e.g., by bulk polymerization, solution, suspension, emulsion and bulk-suspension polymerization. These polymers are produced from a vinyl aromatic monomer and a dienic rubber. The conventional technique consists in dissolving the dienic rubber in the vinyl aromatic monomer and then submitting the mixture to polymerization, in the presence of a catalyst, to produce a vinyl aromatic polymer containing the dienic rubber copolymerized by grafting.

The size of the particles of the rubbery phase is regulated by means of the amount of the grafted phase, the revolution speed (rpm) of the stirrer of the reactor inside which the phase reversal takes place and/or by adjusting the amount of the chain transfer agent, as those skilled in the art are well aware of (see: G.F. Freeguard, British Pol. J. 1974, 6, pages 205-228; and A. Echte, Rubber Toughened Plastics 1989, pages 15-63, Publisher American Chemical Society.

The average chord of the particles is the $d_{50}$ of the cumulated mass distribution. It is determined according to methodologies well known to those skilled in the art, by measuring the particles under the transmission electronic microscope, as described in F. Lenz Mikroskopie 63 (1956) 50-56.

The average chord of the particles of the dienic rubber can be comprised within the range of from 1.2 to 15, preferably of from 1.5 to 10 micrometres.

The dienic rubber incorporated in the vinyl aromatic polymer (II) in order to endow it with high-impact characteristics, may be of either natural or synthetic origin. Suitable synthetic dienic rubbers are those constituted by a polymer of a conjugated diene having from 4 to 6 carbon atoms, and, in particular, polybutadiene, high-cis and medium-cis polybutadiene and low viscosity polybutadiene, polyisoprene, butadiene and/or isoprene copolymers with styrene or other monomers containing more than 50% by weight of butadiene or isoprene. The amount of dienic rubber incorporated to the polymer may range from 5 to 15%, preferably from 7 to 12% by weight.

The expression "vinyl aromatic monomer", as used in the present disclosure and in the appended claims, relates in general to all of the monomers having the general formula (IX):

(IX)

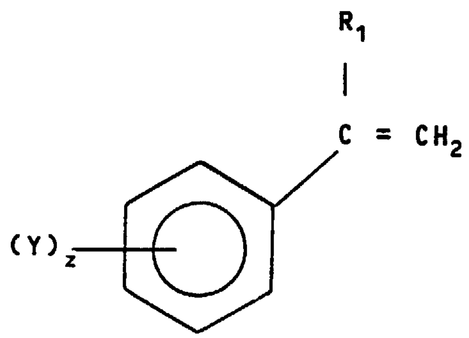

wherein:

- $R_1$ represents a hydrogen atom or a $C_1$-$C_4$ alkyl radical;
- Y represents a hydrogen atom, a halogen atom, or a $C_1$-$C_4$ alkyl radical, and
- z is zero or an integer comprised within the range of from 1 to 5.

Examples of vinyl aromatic monomers having the above reported general formula (IX) are: styrene, methylstyrene, mono-, di-, tri-, and pentachlorostyrene and the corresponding α-methylstyrenes, alkylated-ring styrenes and corresponding α-methylstyrenes, such as ortho- and paramethylstyrenes, ortho- and para-ethylstyrenes, ortho- and para-methyl-α-methylstyrenes, and so forth. These monomers can be used either alone or as mixtures with each other or with other copolymerizable comonomers, such as, e.g., maleic anhydride, acrylonitrile, methacrylonitrile, alkyl esters of acrylic or methacrylic acid.
Styrene is particularly preferred.
The polyphenylene ether ($C_1$), used in the compositions according to the present invention, is a well-known polymer or copolymer, widely used in industry, in particular as an engineering polymer, in those applications in which toughness and heat resistance are required.
The polyphenylene ethers are polymers and copolymers comprising a plurality of structural units of formula (X):

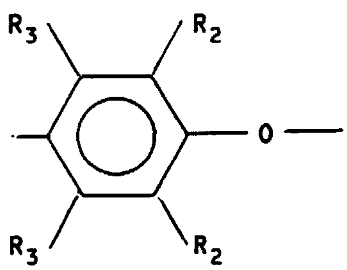

(X)

wherein:

- each $R_2$ independently is a halogen atom, a primary or secondary $C_1$-$C_7$ alkyl, substituted alkyl, phenyl, substituted phenyl, $C_1$-$C_7$ alkyloxy or halo-alkyloxy radical in which at least two carbon atoms separate the halogen and oxygen atoms; and
- each $R_3$ independently is a hydrogen atom, a halogen atom, a primary or secondary $C_1$-$C_7$ alkyl, substituted alkyl, phenyl, substituted phenyl, $C_1$-$C_7$ alkyloxy or halo-alkyloxy radical, as defined for $R_2$.

Examples for $R_2$ and $R_3$ comprise: hydrogen; a halogen, such a chlorine, bromine or fluorine; an alkyl or substituted alkyl radical, such as methyl, ethyl, n.- and iso-propyl, n., sec., iso- and tert.-butyl, n.amyl, n.hexyl, 2,3-dimethylbutyl, chloroethyl, hydroxyethyl, phenylethyl, hydroxymethyl, carboxyethyl, methoxycarbonylethyl, cyanoethyl; aryl or substituted aryl radicals, such as phenyl, chlorophenyl, methylphenyl, dimethylphenyl, ethylphenyl; a benzyl radical or an allyl radical.
Preferred polyphenylene ethers in the present invention are those having the general formula (XI):

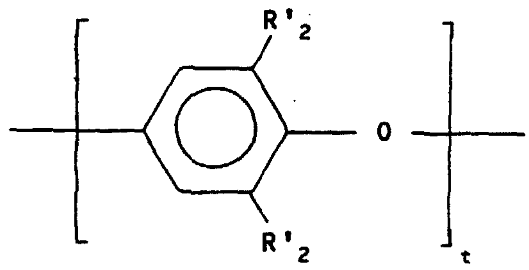

(XI)

wherein the radicals

$R'_2$ independently are an alkyl radical having from 1 to 4 carbon atoms and
t is at least 50 and preferably is comprised within the range of from 60 to about 600.

Illustrative examples of particularly suitable polyphenylene ethers for the present invention are:

-- poly (2,6-dimethyl-1,4-phenylene)ether;
-- poly (2,6-diethyl-1,4-phenylene)ether;
-- poly (2-methyl-6-ethyl-1,4-phenylene)ether;
-- poly (2,6-dipropyl-1,4-phenylene)ether;
-- poly (2-ethyl-6-propyl-1,4-phenylene)ether;

and the like;
most preferred is poly(2,6-dimethyl-1,4-phenylene)ether.
Within the expression "polyphenylene ether ($C_1$)", as used in the present disclosure and in the appended claims, both homo- and co-polymers containing the structural units of above formula (X) are comprised, such as, e.g., those copolymers which comprise units derived from 2,6-dimethylphenol and 2,3,6-trimethyl phenol; as well as also those graft copolymers which are obtained by grafting onto the polyphenylene ether chain one or more vinylic monomer (s), such as acrylonitrile, or vinyl aromatic compounds, such as styrene; or polymers, such as polystyrene, or elastomers.
The polyphenylene ethers generally have an average molecular weight, as determined by Gel Permeation Chromatography (GPC), comprised within the range of from 5,000 to 120,000, and their intrinsic viscosity is higher than 0.1 dl/g and preferably is comprised within the range of from 0.30 to 0.90 dl/g, as measured in chloroform at 23°C.
These polyphenylene ethers can be produced by oxidizing a phenolic compound with oxygen or an oxygen containing gas, preferably in the presence of a catalyst for oxidative coupling, as disclosed in U.S. patent Nos. 3,226,361; 3,234,183; 3,306,874; 3,306,875; 3,257,357; 3,257,358; 3,337,501; 3,787,361; 3,956,242; 3,962,181; 3,965,069; 4,075,174; 4,093,595-598; 4,102,865; 4,184,034; 4,385,168, and so forth.
Additionally to components ($C_1$) and ($C_2$), the compositions according to the present invention may also contain reinforcer additives, such as, e.g., fiberglass, carbon fibres, high-modulus organic and inorganic fibres, metal fibres and inorganic fillers, as well as flame retardant agents, dyes, pigments, stabilizers and lubricants, all of which are well known for those skilled in the art.
The reinforcer additives can be used in amounts which generally are not larger than 50% by weight, and preferably not larger than 30% by weight, based on total composition weight.
Suitable stabilizers to be used in the compositions according to the present invention comprise many from well known suitable heat and oxidation stabilizers, as generally used for polyphenylene ether resins or for high-impact vinyl aromatic polymers. For example, liquid phosphates and sterically hindered phenols can be added to the compositions according to the present invention, in amounts which may range from 0.05 to 5% by weight.
The compositions according to the present invention can be prepared by means of any conventional compounding methods. For example, the compounding can be carried out in the molten state and the mixing time and temperature values are selected and determined according to the composition. Temperatures are generally comprised within the range of from 200 to 300°C.
Any blending units can be used. The method can be either continuous or batchwise. More specifically, single-screw or twin-screw extruders, internal compounders of Banbury type, blending rollers, and the like, can be used.
Whilst all of the components of the composition can be added since the beginning of the compounding step, and directly to the compounding unit, in some cases the polymodal block polymer (i) is preferably pre-blended with the vinyl aromatic polymer containing the dienic rubber in the form of fine particles (ii), before blending step with the polyphe-

nylene ether ($C_1$).

The compositions according to the present invention are easily processed by injection moulding or extrusion and display a set of properties which make them suitable for use in the production of formed articles having high-impact strength, together with a good heat resistance. Thanks to these properties, the compositions according to the present invention find applications in the sectors of haulage and road transport, for the production of manufactured articles which can be oven painted, parts coming into contact with the engine, household appliances, electronic articles and technical articles in general, as sumps, boxes, containers, panels, sheets and rods.

In order to better understand the present invention and to practice it, in the following some illustrative examples are reported which in no way shall be construed as being of limitative character.

In the examples for the determination of the characteristics of the thermoplastic compositions obtained, the following methods were used:

Mechanical properties

The IZOD notched resilience at 23°C according to ASTM D 256, on specimens of 3.2 and 12.7 mm of thickness, the yielding strength, the tensile strength, the elongation at break and elastic modulus according to ASTM D 638, were determined

Thermal properties

The VICAT softening point under 1 kg and at 5 kg in oil was determined according to the standard ISO 306 procedure.

Rheologic properties

The Melt Flow Index (M.F.I.) was determined according to the standard ASTM D 1238 procedure, at 260°C and and under a load of 5 kg was determined.

Examples 1-3

The following components were blended on a compounder unit of drum tumbler type, at room temperature:

-- poly(2,6-dimethyl-1,4-phenylene) ether (PPE) having an intrinsic viscosity of 0.54 (in chloroform at 23°C); used in such amounts as reported in Table 1;

-- a polymodal radial block polymer (i) of styrene-butadiene type, having the above reported structure (VII), comprising 20-21% by weight of butadiene and 79-80% by weight of styrene, and containing silicon as the coupling radical. This polymer is marketed by the company BASF under the trade mark STYROLUX(R) 684 D, and was used in such amounts as reported in Table 1; and

-- a high-impact polystyrene (HIPS) (ii) containing 10.5% by weight of polybutadienic rubber in the form of particles having an average chord of 2.5-3.0 micrometres (as determined by transmission microscopy), a product manufactured by the present Applicant. It was used in such amounts as reported in Table 1.

The resulting compound was dried at 80°C for 4 hours and was extruded by means of a single-screw BANDERA TR 45 extruder, with a length:diameter ratio of 25, with gas venting, at the temperature of 220°C.

By cutting the noodles exiting the extruder, pellets were obtained which were dried at 80°C during 4 hours.

For the determination of the characteristics, the pellets were injection moulded at a temperature of 240-260°C on an injection moulding press NEGRI & BOSSI V-17-110 FA, in order to obtain the specimens having such dimensions as required by the standards.

The properties measured on the resulting specimens are reported in Table 1.

Table 1

| | Examples | | |
|---|---|---|---|
| Components | 1* | 2* | 3 |
| -- PPE (% by weight) | 42 | 42 | 42 |

* Comparison Examples

Table 1 (continued)

| | Examples | | |
|---|---|---|---|
| Components | 1* | 2* | 3 |
| -- STIROLUX(R) 684D (% by weight) | 58 | -- | 43.5 |
| -- HIPS (% by weight) | -- | 58 | 14.5 |
| MECHANICAL PROPERTIES | | | |
| -- IZOD 3.2 mm (J/m) | 70 | 125 | 300 |
| -- IZOD 12.7mm (J/m) | 60 | 105 | 230 |
| -- Yielding strength ($N/mm^2$) | 42 | 50 | 43 |
| -- Tensile strength $N/mm^2$) | 38 | 51 | 39 |
| -- Elongation at break (%) | 30 | 75 | 70 |
| -- Elastic modulus ($N/mm^2$) | 2150 | 1950 | 2100 |
| THERMAL PROPERTIES | | | |
| -- VICAT Softening point / 1 kg (°C) | 134 | 144 | 138 |
| -- VICAT Softening point / 5 kg (°C) | 118 | 135 | 122 |
| RHEOLOGIC PROPERTIES | | | |
| -- M.F.I. (g/10 min) | 1,5 | 1 | 1,2 |

* Comparison Examples

Example 4

The operating modalities of Example 3 were repeated, with STYROLUX(R) 684 D being replaced by STYROLUX(R) 2686. This product is marketed by the company BASF and is a polymodal radial styrene-butadiene block polymer containing approximately 26% by weight of butadiene and approximately 74% by weight of styrene, and silicon as the coupling agent.
The properties of the resulting compound are:

MECHANICAL PROPERTIES

- -- IZOD 3.2 mm 360 J/m
- -- IZOD 12.7 mm 290 J/m
- -- Yielding strength 44 $N/mm^2$
- -- Tensile strength 42 $N/mm^2$
- -- Elongation at break 74 %
- -- Elastic modulus 2150 $N/mm^2$

THERMAL PROPERTIES

- -- VICAT Softening Point under 1 kg 137.5°C
- -- VICAT Softening Point under 5 kg 123°C

Examples 5-9

The operating modalities of Example 1 were repeated with STYROLUX(R) 684 D being replaced by FINCLEAR(R) 520, which was used in such amounts as reported in Table 2. FINCLEAR(R) 520 is a polymodal linear styrene-butadiene block polymer having the above reported structure (I), containing a tapered block between B and $S_2$, and having a content of styrene of 74% by weight, and of 26% of butadiene, by weight.
The characteristics of the resulting compounds are reported in following Table 2:

Table 2

| | Examples | | | | |
|---|---|---|---|---|---|
| Components | 5* | 6 | 7 | 8 | 9 |
| -- PPE (% by weight) | 42 | 42 | 42 | 20 | 20 |
| -- FINACLEAR(R) 520 (% by weight) | 58 | 43.5 | 29 | 60 | 40 |
| -- HIPS (% by weight) | | 14.5 | 29 | 20 | 40 |
| MECHANICAL PROPERTIES | | | | | |
| -- IZOD 3.2 mm (J/m) | 70 | 350 | 250 | 400 | 350 |
| -- IZOD 12.7 mm (J/m) | 58 | 270 | 170 | 300 | 270 |
| -- Yielding strength ($N/mm^2$) | 45 | 46 | 46 | 29 | 28 |
| -- Tensile strength $N/mm^2$) | 41 | 45 | 46 | 28 | 30 |
| -- Elongation at break (%) | 50 | 78 | 80 | 115 | 90 |
| -- Elastic modulus ($N/mm^2$) | 1900 | 1950 | 1950 | 1400 | 1400 |
| THERMAL PROPERTIES | | | | | |
| -- VICAT 1 kg (°C) | 135 | 138 | 140 | 113 | 115 |
| -- VICAT 5 kg (°C) | 119 | 121 | 125 | 90 | 97 |

* Comparison Examples

## Claims

**1.** Moulding composition having an extremely good combination of physical- mechanical, tensile and thermal properties which consists of:

(C1) a polyphenylene ether, and
(C2) a high impact vinyl aromatic polymer consisting of a blend of

(i) a vinyl aromatic monomer-conjugated diene block polymer, containing at least two blocks with different molecular weights prevailingly consisting of a vinyl aromatic monomer, and at least one block prevailingly consisting of a conjugated diene, said polymer having a content of vinyl aromatic monomer comprised within the range of from 55 to 85% by weight, and
(ii) a high-impact vinyl-aromatic polymer, containing from 5 to 15% by weight, based on said polymer, of a dispersed dienic rubber in the form of particles having a cellular structure and an average chord of at least 1.2 micrometers.

**2.** Moulding composition according to claim 1, characterized in that said component ($C_1$) is present in amounts of at least 1% by weight, and said component ($C_2$) is present in amounts of at least 20% by weight, based on total composition.

**3.** Moulding composition according to any of the preceding claims, characterized in that it contains:

* from 5 to 60% by weight of polyphenylene ether ($C_1$) and,
* from 95 to 40% by weight of the high-impact vinyl aromatic polymer ($C_2$);

with said percent levels being referred to the total weight of the blend.

**4.** Moulding composition according to any of the preceding claims, characterized in that it contains:

* from 20 to 45% by weight of polyphenylene ether ($C_1$) and,
* from 80 to 55% by weight of high-impact vinyl aromatic polymer ($C_2$);

with said percent levels being referred to the total weight of the blend.

**5.** Moulding composition according to any of the preceding claims, in which the high-impact vinyl aromatic polymer ($C_2$) contains from 30 to 90% by weight of polymodal block polymer (i) and from 70 to 10% by weight of vinyl aromatic polymer (ii) containing the dienic rubber in the form of dispersed particles.

**6.** Moulding composition according to claim 5, in which the block polymer (i) is present at a level comprised within the range of from 50 to 85% by weight and the high-impact vinyl aromatic polymer (ii) is present at a level comprised within the range of from 50 to 15% by weight.

**7.** Moulding composition according to any of the preceding claims, in which the block polymer (i) is of linear type, having the general formula (I) or (II):

$$\text{(I)} \qquad S_1\text{-}B\text{-}S_2;$$

$$\text{(II)} \qquad B_1\text{-}S_1\text{-}B_2\text{-}S_2;$$

in which: $S_1$ and $S_2$ are non-elastomeric polymeric blocks of a vinyl aromatic monomer having different molecular weights; and B, $B_1$ and $B_2$ are elastomeric polymeric blocks based on a conjugated diene, having the same, or different molecular weights; said non-elastomeric polymeric blocks having a molecular weight comprised within the range of from 5,000 to 250,000 and said elastomeric blocks having a molecular weight comprised within the range of from 2,000 to 250,000.

**8.** Moulding composition according to claim 7, in which between the polymeric blocks $S_1$, $S_2$ and B, $B_1$ and $B_2$, "random" and/or "tapered" chain portions are present.

**9.** Moulding composition according to any of the preceding claims 1 to 6, in which the block polymer (i) is of radial type, having one of following general formulae from (III) to (VIII):

$$\text{(III)} \qquad (S_1\text{-}S_2\text{-}B_1)_n \text{ - X - } (B_1 \text{ - } S_2)_m;$$

$$\text{(IV)} \qquad (S_1\text{-}S_2/B_1\text{-}B_2)_m \text{ - X - } (B_2\text{-}B_1/S_2)_n;$$

$$\text{(V)} \qquad (S_1\text{-}S_2\text{-}B_1/S_3\text{-}B_2)_m \text{ - X - } (B_2\text{-}S_3/B_1\text{-}S_2)_n;$$

$$\text{(VI)} \qquad (S_1\text{-}B_1 \rightarrow S_2)_n \text{ - X - } (S_2 \leftarrow B_1)_m;$$

$$\text{(VII)} \qquad (S_3\text{-}S_4\text{-}B_2 \rightarrow S_5)_n \text{ - X - } (S_5 \leftarrow B_2\text{-}S_4)_m$$

$$\text{(VIII)} \qquad \begin{array}{r} (S_6\text{-}S_7\text{-}B_3\text{-}S_8\text{-}B_4)_p \phantom{\text{-X}} \\ \backslash \phantom{\text{-X}} \\ (S_7\text{-}B_3\text{-}S_8\text{-}B_4)_q\text{-X} \\ / \phantom{\text{-X}} \\ (S_8\text{-}B_4)_r \phantom{\text{-X}} \end{array}$$

wherein:

$S_1$, $S_2$, $S_3$, $S_4$, $S_5$, $S_6$, $S_7$, and $S_8$ are non-elastomeric polymeric blocks, of a vinylaromatic monomer,

each having different molecular weights, thus yielding bimodal, trimodal, or, in general, polymodal blocks;

$B_1$, $B_2$, $B_3$ and $B_4$ are elastomeric polymeric blocks based on a conjugated diene, having the same molecular weight or different molecular weights from one another;

X is the radical of a polyfunctional coupling agent, by means of which the block copolymers forming the arms are chemically coupled with one another;

m and n are integers, with m being larger than n, and the sum of which is equal to or larger than 3, generally comprised within the range of from 3 to 10 and preferably is either 3 or 4, and corresponds to the functionality of radical X; and

p, q and r are integers the sum of which is equal to or larger than 3, generally comprised within the range of from 3 to 10 and preferably is either 3 or 4, and corresponds to the functionality of radical X; and

$S_2/B_1$, $B_1/S_2$, $B_1/S_3$ and $S_3/B_1$ are blocks of copolymers of either "random" and/or "tapered" type of vinyl aromatic monomer and conjugated diene.

**10.** Moulding composition according to claim 9, in which the non-elastomeric polymeric blocks have a molecular weight comprised within the range of from 5,000 to 250,000, the elastomeric polymeric blocks have a molecular weight comprised within the range of from 5,000 to 50,000, the copolymer blocks $S_2/B_1$, $B_1/S_2$, $B_1/S_3$, $S_3/B_1$ of "random" and/or "tapered" type have a molecular weight comprised within the range of from 500 to 50,000, and the blocks $B_1 \rightarrow S_2$ and $B_2 \rightarrow S_5$ have a molecular weight comprised within the range of from 10,000 to 100,000.

**11.** Moulding composition according to any of the preceding claims, in which the high-impact vinyl aromatic polymer (ii) is produced by polymerizing a vinyl aromatic monomer and a dienic rubber.

**12.** Moulding composition according to claim 11, in which the content of dienic rubber in the highimpact vinyl aromatic polymer (ii) is comprised within the range of from 5 to 15%, preferably of from 7 to 12% by weight.

**13.** Moulding composition according to claim 11 or 12, in which the average chord of dienic rubber particles is comprised within the range of from 1.2 to 15, preferably of from 1.5 to 10 micrometres.

**14.** Moulding composition according to any of the preceding claims, in which the vinyl aromatic monomer is styrene.

**15.** Moulding composition according to any of the preceding claims, in which the conjugated diene is 1,3-butadiene.

**16.** Moulding composition according to any of the preceding claims, in which the dienic rubber is selected from a polymer of a conjugated diene having from 4 to 6 carbon atoms, such as polybutadiene, high-cis and medium-cis polybutadiene and low viscosity polybutadiene, polyisoprene, and a butadiene and/or isoprene copolymer with styrene or other monomers containing more than 50% by weight of butadiene or isoprene.

**17.** Moulding composition according to any of the preceding claims, in which the polyphenylene ether ($C_1$) comprises a plurality of structural units of formula (X):

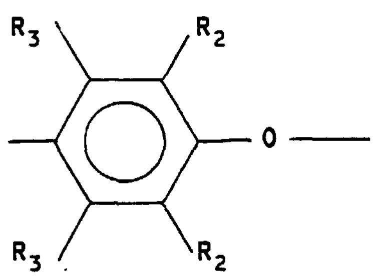

(X)

wherein:

each $R_2$ independently is a halogen atom, a primary or secondary $C_1$-$C_7$alkyl, substituted alkyl, phenyl, substituted phenyl, $C_1$-$C_7$ alkyloxy or halo-alkyloxy radical in which at least two carbon atoms separate the halogen and oxygen atoms; and

each $R_3$ independently is a hydrogen atom, a halogen atom, a primary or secondary $C_1$-$C_7$alkyl, substituted alkyl, phenyl, substituted phenyl, $C_1$-$C_7$ alkyloxy or halo-alkyloxy radical, as defined for $R_2$.

**18.** Moulding composition according to any of the preceding claims, in which the polyphenylene ether ($C_1$) has the general formula (XI):

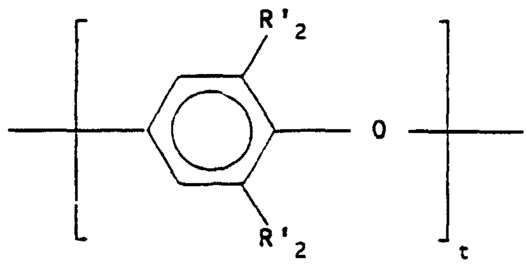

(XI)

wherein the radicals

$R'_2$ independently are an alkyl radical having from 1 to 4 carbon atoms and

t is at least 50 and preferably is comprised within the range of from 60 to about 600.

**19.** Moulding composition according to any of the preceding claims, in which said polyphenylene ether ($C_1$) is poly (2,6-dimethyl-1,4-phenylene)ether having an average molecular weight, as determined by Gel Permeation Chromatography (GPC), comprised within the range of from 5,000 to 120,000, and having an intrinsic viscosity higher than 0.1 dl/g, and preferably comprised within the range of from 0.30 to 0.90 dl/g, as measured in chloroform at 23°C.

**20.** Moulding composition according to any of the preceding claims, additionally containing reinforcer additives, such as fiberglass, carbon fibres, high-modulus organic and inorganic fibres, metal fibres, inorganic fillers, as well as flame retardants, dyes, pigments, stabilizers, lubricants, in an amount not higher than 50% by weight and preferably not higher than 30% by weight, based on total composition weight.

**Patentansprüche**

**1.** Formmasse mit einer äußerst günstigen Kombination von physikalisch-mechanischen Eigenschaften, Zugeigenschaften und thermischen Eigenschaften, bestehend aus:

(C1) einem Polyphenylenether und

(C2) einem hochschlagfesten vinylaromatischen Polymeren, bestehend aus einem Gemisch aus

(i) einem Blockpolymeren aus einem vinylaromatischen Monomeren und einem konjugierten Dien, das mindestens zwei Blöcke mit unterschiedlichen Molekulargewichten, die vorwiegend aus einem vinylaromatischen Monomeren bestehen, und mindestens einen Block, der vorwiegend aus einem konjugierten Dien besteht, enthält, wobei das Polymere einen Anteil an dem vinylaromatischen Monomeren im Bereich von 55 bis 85 Gew.-% aufweist, und

(ii) einem hochschlagfesten vinylaromatischen Polymeren, das 5 bis 15 Gew.-%, bezogen auf das Polymere, eines dispergierten Dienkautschuks in Form von Teilchen mit einer zellulären Struktur und einem durchschnittlichen Chord-Wert von mindestens 1,2 µm.

**2.** Formmasse nach Anspruch 1, dadurch gekennzeichnet, daß die Komponente ($C_1$) in Mengen von mindestens 1 Gew.-% und die Komponente ($C_2$) in Mengen von mindestens 20 Gew.-%, bezogen auf die Gesamtzusammensetzung, vorhanden sind.

**3.** Formmasse nach einem der vorstehenden Ansprüche, dadurch gekennzeichnet, daß sie folgende Bestandteile

enthält:

* 5 bis 60 Gew.-% Polyphenylenether ($C_1$) und
* 95 bis 40 Gew.-% des hochschlagfesten vinylaromatischen Polymeren ($C_2$),

wobei sich die prozentualen Anteile auf das Gesamtgewicht der Mischung beziehen.

**4.** Formmasse nach einem der vorstehenden Ansprüche, dadurch gekennzeichnet, daß sie folgende Bestandteile enthält:

* 20 bis 45 Gew.-% Polyphenylenether ($C_1$) und
* 80 bis 55 Gew.-% hochschlagfestes vinylaromatisches Polymeres ($C_2$),

wobei sich die prozentualen Anteile auf das Gesamtgewicht der Mischung beziehen.

**5.** Formmasse nach einem der vorstehenden Ansprüche, in der das hochschlagfeste vinylaromatische Polymere ($C_2$) 30 bis 90 Gew.-% polymodales Blockpolymeres (i) und 70 bis 10 Gew.-% vinylaromatisches Polymeres (ii) mit einem Gehalt an Dienkautschuk in Form von dispergierten Teilchen enthält.

**6.** Formmasse nach Anspruch 5, in der das Blockpolymere (i) in einem Anteil im Bereich von 50 bis 85 Gew.-% und das hochschlagfeste vinylaromatische Polymere (ii) in einem Anteil im Bereich von 50 bis 15 Gew.-% vorhanden sind.

**7.** Formmasse nach einem der vorstehenden Ansprüche, in der das Blockpolymere (i) vom linearen Typ ist und die allgemeinen Formeln (I) oder (II) aufweist:

$$\text{(I)} \qquad S_1\text{-}B\text{-}S_2;$$

$$\text{(II)} \qquad B_1\text{-}S_1\text{-}B_2\text{-}S_2;$$

worin $S_1$ und $S_2$ nicht-elastomere polymere Blöcke eines vinylaromatischen Monomeren, die unterschiedliche Molekulargewichte aufweisen, bedeuten; und B, $B_1$ und $B_2$ elastomere polymere Blöcke auf der Basis eines konjugierten Diens bedeuten, die gleiche oder unterschiedliche Molekulargewichte aufweisen; wobei die nicht-elastomeren polymeren Blöcke ein Molekulargewicht im Bereich von 5000 bis 250 000 und die elastomeren Blöcke ein Molekulargewicht im Bereich von 2000 bis 250 000 aufweisen.

**8.** Formmasse nach Anspruch 7, in der zwischen den polymeren Blöcken $S_1$, $S_2$ und B als Bestandteile $B_1$ und $B_2$ "statistische" und/oder "konische" Kettenbereiche vorliegen.

**9.** Formmasse nach einem der vorstehenden Ansprüche 1 bis 6, in der das Blockpolymere (i) vom radialen Typ ist und eine der folgenden Formeln (III) bis (VIII) aufweist:

$$\text{(III)} \qquad (S_1\text{-}S_2\text{-}B_1)_n \text{ - X - } (B_1 \text{ - } S_2)_m;$$

$$\text{(IV)} \qquad (S_1\text{-}S_2/B_1\text{-}B_2)_m \text{ - X - } (B_2\text{-}B_1/S_2)_n;$$

$$\text{(V)} \qquad (S_1\text{-}S_2\text{-}B_1/S_3\text{-}B_2)_m \text{ - X - } (B_2\text{-}S_3/B_1\text{-}S_2)_n;$$

$$\text{(VI)} \qquad (S_1\text{-}B_1 \rightarrow S_2)_n \text{ - X - } (S_2 \leftarrow B_1)_m;$$

$$\text{(VII)} \qquad (S_3\text{-}S_4\text{-}B_2 \rightarrow S_5)_n \text{ - X - } (S_5 \leftarrow B_2\text{-}S_4)_m;$$

(VIII) $(S_6-S_7-B_3-S_8-B_4)_p$
\
$(S_7-B_3-S_8-B_4)_q-X$
/
$(S_8-B_4)_r$

worin:

$S_1$, $S_2$, $S_3$, $S_4$, $S_5$, $S_6$, $S_7$ und $S_8$ nicht-elastomere polymere Blöcke eines vinylaromatischen Monomeren bedeuten, die jeweils unterschiedliche Molekulargewichte aufweisen, wodurch sich bimodale, trimodale oder im allgemeinen polymodale Blöcke ergeben;
$B_1$, $B_2$, $B_3$ und $B_4$ elastomere polymere Blöcke auf der Basis eines konjugierten Diens bedeuten, die jeweils das gleiche Molekulargewicht oder voneinander unterschiedliche Molekulargewichte aufweisen;
X den Rest eines polyfunktionellen Kupplungsmittels bedeutet, durch das die Blockcopolymeren, die die Arme bilden, chemisch miteinander gekuppelt sind;
m und n ganze Zahlen bedeuten, wobei m größer als n ist und ihre Summe gleich oder größer als 3 ist und im allgemeinen im Bereich von 3 bis 10 liegt und vorzugsweise 3 oder 4 beträgt und der Funktionalität des Restes X entspricht; und
p, q und r ganze Zahlen bedeuten, deren Summe gleich oder größer als 3 ist und im allgemeinen im Bereich von 3 bis 10 liegt und vorzugsweise 3 oder 4 beträgt und der Funktionalität des Restes X entspricht; und
$S_2/B_1$, $B_1/S_2$, $B_1/S_3$ und $S_3/B_1$ Blöcke von Copolymeren vom entweder "statistischen" und/oder "konischen" Typ des vinylaromatischen Monomeren und des konjugierten Diens bedeuten.

**10.** Formmasse nach Anspruch 9, in der die nicht-elastomeren polymeren Blöcke ein Molekulargewicht im Bereich von 5000 bis 250 000 aufweisen, die Elastomeren polymeren Blöcke ein Molekulargewicht im Bereich von 5000 bis 50 000 aufweisen, die Copolymerblöcke $S_2/B_1$, $B_1/S_2$, $B_1/S_3$, $S_3/B_1$ vom "statistischen" und/oder "konischen" Typ ein Molekulargewicht im Bereich von 500 bis 50 000 aufweisen und die Blöcke $B_1 \rightarrow S_2$ und $B_2 \rightarrow S_5$ ein Molekulargewicht im Bereich von 10 000 bis 100 000 aufweisen.

**11.** Formmasse nach einem der vorstehenden Ansprüche, in der das hochschlagfeste vinylaromatische Polymere (ii) durch Polymerisation eines vinylaromatischen Monomeren und eines Dienkautschuks gebildet worden ist.

**12.** Formmasse nach Anspruch 11, in der der Anteil des Dienkautschuks im hochschlagfesten vinylaromatischen Polymeren (ii) im Bereich von 5 bis 15 Gew.-% und vorzugsweise von 7 bis 12 Gew.-% liegt.

**13.** Formmasse nach Anspruch 11 oder 12, in der der durchschnittliche Chord-Wert der Dienkautschukteilchen im Bereich von 1,2 bis 15 und vorzugsweise von 1,5 bis 10 µm liegt.

**14.** Formmasse nach einem der vorstehenden Ansprüche, in der es sich beim vinylaromatischen Monomeren um Styrol handelt.

**15.** Formmasse nach einem der vorstehenden Ansprüche, in der es sich beim konjugierten Dien um 1,3-Butadien handelt.

**16.** Formmasse nach einem der vorstehenden Ansprüche, in der der Dienkautschuk unter einem Polymeren eines konjugierten Diens mit 4 bis 6 Kohlenstoffatomen, wie Polybutadien, hochgradigem cis- und mittlerem cis-Polybutadien und Polybutadien von geringer Viskosität, Polyisopren und einem Butadien- und/oder Isopren-Copolymeren mit Styrol oder anderen Monomeren, die mehr als 50 Gew.-% Butadien oder Isopren enthalten, ausgewählt ist.

**17.** Formmasse nach einem der vorstehenden Ansprüche, in der der Polyphenylenether ($C_1$) eine Mehrzahl von Struktureinheiten der Formel (X) enthält

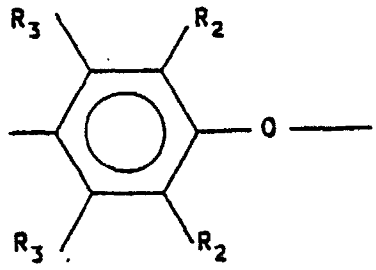

(X)

worin

die Reste $R_2$ jeweils unabhängig voneinander ein Halogenatom, primäres oder sekundäres $C_1$-$C_7$-Alkyl, substituiertes Alkyl, Phenyl, substituiertes Phenyl, $C_1$-$C_7$-Alkoxy oder Halogenalkyloxy bedeuten, wobei die Halogen- und Sauerstoffatome durch mindestens zwei Kohlenstoffatome getrennt sind; und
die Reste $R_3$ jeweils unabhängig voneinander ein Wasserstoffatom, ein Halogenatom, primäres oder sekundäres $C_1$-$C_7$-Alkyl, substituiertes Alkyl, Phenyl, substituiertes Phenyl, $C_1$-$C_7$-Alkyloxy oder Halogenalkyloxy gemäß der Definition für $R_2$ bedeuten.

**18.** Formmasse nach einem der vorstehenden Ansprüche, in der der Polyphenylenether ($C_1$) die allgemeine Formel (XI) aufweist:

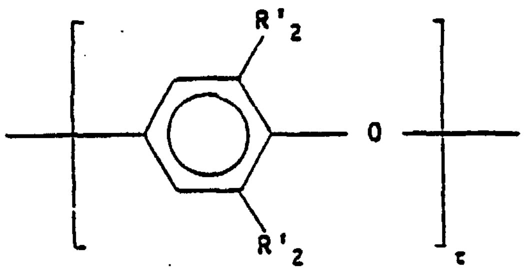

(XI)

worin die Reste

$R'_2$ unabhängig voneinander einen Alkylrest mit 1 bis 4 Kohlenstoffatomen bedeuten und
t einen Wert von mindestens 50 und vorzugsweise einen Wert im Bereich von 60 bis etwa 600 bedeutet.

**19.** Formmasse nach einem der vorstehenden Ansprüche, in der es sich beim Polyphenylenether ($C_1$) um Poly-(2,6-dimethyl-1,4-phenylen)-ether mit einem durch Gelpermeationschromatographie (GPC) bestimmten Molekulargewichtsmittel im Bereich von 5000 bis 120 000 und einer inneren Viskosität von mehr als 0,1 dl/g und vorzugsweise im Bereich von 0,30 bis 0,90 dl/g, gemessen in Chloroform bii 23°C, handelt.

**20.** Formmasse nach einem der vorstehenden Ansprüche, zusätzlich enthaltend verstärkende Additive, wie Glasfasern, Kohlenstoffasern, organische und anorganische Fasern mit einem hohen Modul, Metallfasern und anorganische Füllstoffe, sowie flammhemmende Mittel, Farbstoffe, Pigmente, Stabilisatoren und Gleitmittel in einer Menge von nicht mehr als 50 Gew.-% und vorzugsweise von nicht mehr als 30 Gew.-%, bezogen auf das Gesamtgewicht der Zusammensetzung.

**Revendications**

**1.** Composition à mouler ayant une combinaison extrêmement satisfaisante de propriétés physicomécaniques, de traction et thermiques qui consiste en:

($C_1$) un poly(oxyphénylène) et
($C_2$) un polymère vinylique aromatique à haute résistance aux chocs consistant en un mélange de

(i) un polymère séquencé monomère vinylique aromatique-diène conjugué contenant au moins deux séquences ayant des masses moléculaires différentes consistant principalement en un monomère vinylique aromatique, et au moins une séquence consistant principalement en un diène conjugué, ledit polymère ayant une teneur en monomère vinylique aromatique comprise dans le domaine de 55 à 85% en masse, et
(ii) un polymère vinylique aromatique à haute résistance aux chocs contenant de 5 à 15% en masse, par rapport audit polymère, d'un caoutchouc diénique dispersé sous forme de particules ayant une structure cellulaire et une corde moyenne d'au moins 1,2 micromètres.

**2.** Composition à mouler selon la revendication 1 caractérisée en ce que ledit composant ($C_1$) est présent en des quantités d'au moins 1% en masse et ledit composant ($C_2$) est présent en des quantités d'au moins 20% en masse, par rapport à la composition totale.

**3.** Composition à mouler selon l'une quelconque des revendications précédentes caractérisée en ce qu'elle contient:

* de 5 à 60% en masse de poly(oxyphénylène) ($C_1$) et
* de 95 à 40% en masse de polymère vinylique aromatique à haute résistance aux chocs ($C_2$);

lesdits niveaux en pourcentages étant rapportés à la masse totale du mélange.

**4.** Composition à mouler selon l'une quelconque des revendications précédentes caractérisée en ce qu'elle contient:

* de 20 à 45% en masse de poly(oxyphénylène) ($C_1$) et
* de 80 à 55% en masse de polymère vinylique aromatique à haute résistance aux chocs ($C_2$);

lesdits niveaux en pourcentages étant rapportés à la masse totale du mélange.

**5.** Composition à mouler selon l'une quelconque des revendications précédentes dans laquelle le polymère vinylique aromatique à haute résistance aux chocs ($C_2$) contient de 30 à 90% en masse de polymère séquence polymodal (i) et de 70 à 10% en masse de polymère vinylique aromatique (ii) contenant le caoutchouc diénique sous forme de particules dispersées.

**6.** Composition à mouler selon la revendication 5 dans laquelle le polymère séquence (i) est présent à un niveau compris dans le domaine de 50 à 85% en masse et le polymère vinylique aromatique à haute résistance aux chocs (ii) est présent à un niveau compris dans le domaine de 50 à 15% en masse.

**7.** Composition à mouler selon l'une quelconque des revendications précédentes dans laquelle le polymère séquence (i) est de type linéaire, ayant la formule générale (I) ou (II):

$$\text{(I)} \qquad S_1\text{-}B\text{-}S_2;$$

$$\text{(II)} \qquad B_1\text{-}S_1\text{-}B_2\text{-}S_2;$$

où: $S_1$ et $S_2$ sont des séquences polymères non élastomères d'un monomère vinylique aromatique ayant des masses moléculaires différentes, et B, $B_1$ et $B_2$ sont des séquences polymères élastomères basées sur un diène conjugué, ayant des masses moléculaires identiques ou différentes, lesdites séquences polymères non élastomères ayant une masse moléculaire comprise dans le domaine de 5000 à 250000 et lesdites séquences élastomères ayant une masse moléculaire comprise dans le domaine de 2000 à 250000.

**8.** Composition à mouler selon la revendication 7 dans laquelle des portions de chaîne "statistiques" et/ou "effilées" sont présentes entre les séquences polymères $S_1$, $S_2$ et B, $B_1$ et $B_2$.

**9.** Composition à mouler selon l'une quelconque des revendications 1 à 6 précédentes dans laquelle le polymère séquencé (i) est de type radial, ayant l'une des formules générales (III) à (VIII) suivantes:

(III) $(S_1\text{-}S_2\text{-}B_1)_n\text{-}X\text{-}(B_1\text{-}S_2)_m$;

(IV) $(S_1\text{-}S_2/B_1\text{-}B_2)_m\text{-}X\text{-}(B_2\text{-}B_1/S_2)_n$;

(V) $(S_1\text{-}S_2\text{-}B_1/S_3\text{-}B_2)_m\text{-}X\text{-}(B_2\text{-}S_3/B_1\text{-}S_2)_n$;

(VI) $(S_1\text{-}B_1 \rightarrow S_2)_n\text{-}X\text{-}(S_2 \leftarrow B_1)_m$;

(VII) $(S_3\text{-}S_4\text{-}B_2 \rightarrow S_5)_n\text{-}X\text{-}(S_5 \leftarrow B_2\text{-}S_4)_m$;

```
(VIII) (S6-S7-B3-S8-B4)p
                        \
            (S7-B3-S8-B4)q-X
                        /
                  (S8-B4)r
```

où:

| | |
|---|---|
| $S_1$, $S_2$, $S_3$, $S_4$, $S_5$, $S_6$, $S_7$ et $S_8$ | sont des séquences polymères non élastomères d'un monomère vinylique aromatique ayant chacune des masses moléculaires différentes, en formant ainsi des séquences bimodales, trimodales ou, en général, polymodales; |
| $B_1$, $B_2$, $B_3$ et $B_4$ | sont des séquences polymères élastomères à base d'un diène conjugué, ayant la même masse moléculaire ou des masses moléculaires différentes les unes des autres; |
| X | est le radical d'un agent de couplage polyfonctionnel, au moyen duquel les copolymères séquences formant les branches sont couplés chimiquement les uns aux autres; |
| m et n | sont des entiers, m étant supérieur à n, et dont la somme est égale ou supérieure à 3, comprise généralement dans le domaine de 3 à 10 et est de préférence 3 ou 4, et correspond à la fonctionnalité du radical X; et |
| p, q et r | sont des entiers dont la somme est égale ou supérieure à 3, comprise généralement dans le domaine de 3 à 10 et est de préférence 3 ou 4, et correspond à la fonctionnalité du radical X; et |
| $S_2/B_1$, $B_1/S_2$, $B_1/S_3$ et $S_3/B_1$ | sont des séquences de copolymères de type "statistique" et/ou "effilé" de monomère vinylique aromatique et de diène conjugué. |

**10.** Composition à mouler selon la revendication 9 dans laquelle les séquences polymères non élastomères ont une masse moléculaire comprise dans le domaine de 5000 à 250000, les séquences polymères élastomères ont une masse moléculaire comprise dans le domaine de 5000 à 50000, les séquences polymères $S_2/B_1$, $B_1/S_2$ $B_1/S_3$ et $S_3/B_1$ de type "statistique" et/ou "effilé" ont une masse moléculaire comprise dans le domaine de 500 à 50000, et les séquences $B_1 \rightarrow S_2$ et $B_2 \rightarrow S_5$ ont une masse moléculaire comprise dans le domaine de 10000 à 100000.

**11.** Composition à mouler selon l'une quelconque des revendications précédentes dans laquelle le polymère vinylique aromatique à haute résistance aux chocs (ii) est produit par polymérisation d'un monomère vinylique aromatique et d'un caoutchouc diénique.

**12.** Composition à mouler selon la revendication 11 dans laquelle la teneur du caoutchouc diénique dans le polymère vinylique aromatique à haute résistance aux chocs (ii) est comprise dans le domaine de 5 à 15%, de préférence

de 7 à 12% en masse.

**13.** Composition à mouler selon la revendication 11 ou 12 dans laquelle la corde moyenne des particules de caoutchouc diénique est comprise dans le domaine de 1,2 à 15, de préférence de 1,5 à 10 micromètres.

**14.** Composition à mouler selon l'une quelconque des revendications précédentes dans laquelle le monomère vinylique aromatique est le styrène.

**15.** Composition à mouler selon l'une quelconque des revendications précédentes dans laquelle le diène conjugué est le 1,3-butadiène.

**16.** Composition à mouler selon l'une quelconque des revendications précédentes dans laquelle le caoutchouc diénique est choisi parmi un polymère d'un diène conjugué ayant de 4 à 6 atomes de carbone, comme le polybutadiène, le polybutadiène hautement cis et moyennement cis et le polybutadiène de basse viscosité, le polyisoprène et un copolymère du butadiène et/ou de l'isoprène avec le styrène ou d'autres monomères contenant plus de 50% en masse de butadiène ou d'isoprène.

**17.** Composition à mouler selon l'une quelconque des revendications précédentes dans laquelle le poly(oxyphénylène) ($C_1$) comprend une pluralité d'unités structurales de formule (X):

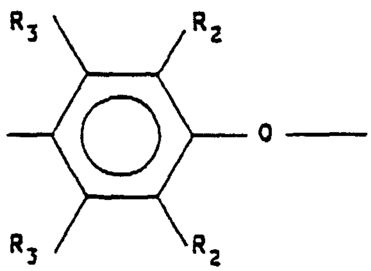

(X)

où:

chaque $R_2$ est indépendamment un atome d'halogène, un radical alkyle primaire ou secondaire en $C_1$-$C_7$, alkyle substitué, phényle, phényle substitué, alkyloxy en $C_1$-$C_7$ ou halogénoalkyloxy dans lequel au moins deux atomes de carbone séparent les atomes d'halogène et d'oxygène; et

chaque $R_3$ est indépendamment un atome d'hydrogène, un atome d'halogène, un radical alkyle primaire ou secondaire en $C_1$-$C_7$, alkyle substitué, phényle, phényle substitué, alkyloxy en $C_1$-$C_7$ ou halogénoalkyloxy comme défini pour $R_2$.

**18.** Composition à mouler selon l'une quelconque des revendications précédentes dans laquelle le poly(oxyphénylène) ($C_1$) a la formule générale (XI):

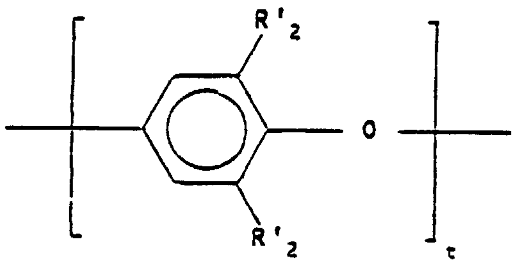

(XI)

où les radicaux

$R'_2$ sont indépendamment un radical alkyle ayant de 1 à 4 atomes de carbone et

t est au moins 50 et de préférence est compris dans le domaine de 60 à environ 600.

**19.** Composition à mouler selon l'une quelconque des revendications précédentes dans laquelle ledit poly(oxyphénylène) ($C_1$) est le poly(oxy-2,6-diméthyl-1,4-phénylène) ayant une masse moléculaire moyenne, déterminée par chromatographie par perméation de gel (CPG), comprise dans le domaine de 5000 à 120000, et ayant une viscosité intrinsèque, mesurée dans le chloroforme à 23°C, supérieure à 0,1 dl/g, et comprise de préférence dans le domaine de 0,30 à 0,90 dl/g.

**20.** Composition à mouler selon l'une quelconque des revendications précédentes contenant en outre des additifs de renforcement comme des fibres de verre, des fibres de carbone, des fibres organiques et inorganiques à haut module, des fibres métalliques, des charges inorganiques, ainsi que des agents ignifugeants, des colorants, des pigments, des stabilisants, des lubrifiants, en une quantité pas supérieure à 50% en masse et de préférence pas supérieure à 30% en masse, par rapport à la masse totale de la composition.